Europäisches Patentamt

**European Patent Office**

Office européen des brevets

(11) Publication number: **0 117 385**
**B1**

# EUROPEAN PATENT SPECIFICATION

(45) Date of publication of patent specification: **02.03.88**

(21) Application number: **83850343.1**

(22) Date of filing: **23.12.83**

(51) Int. Cl.⁴: **C 09 J 5/02,** C 09 J 5/06,
C 09 J 3/14, C 09 J 3/30

(54) **Sound-damping or sound-proofing material, and a method of adhering the material to a substrate.**

(30) Priority: **31.01.83 SE 8300475**

(43) Date of publication of application:
**05.09.84 Bulletin 84/36**

(45) Publication of the grant of the patent:
**02.03.88 Bulletin 88/09**

(84) Designated Contracting States:
**DE FR GB IT NL SE**

(56) References cited:
**DE-A-1 569 907**
**DE-A-2 740 291**
**DE-C- 653 285**
**FR-A-2 186 449**
**FR-A-2 329 733**

(73) Proprietor: **ICOPAL AB**
**Skeppsbron 11**
**S-201 80 Malmö (SE)**

(72) Inventor: **Holmgren, Lars Christer**
**Grönvägen 5 D**
**S-23200 Arlöv (SE)**
Inventor: **Nyberg, Per Olof John**
**Lövsangargatan 5**
**D-23500 Vellinge (SE)**

(74) Representative: **Wallin, Bo-Göran et al**
**AWAPATENT AB Box 5117**
**S-200 71 Malmö (SE)**

Courier Press, Leamington Spa, England.

## Description

The sound-damping and sound-proofing of, for example, motor vehicles, usually is done by adhering to a substrate, such as the cowl panel of the vehicle or the floor of the passenger compartment, a bitumen-based, panel- or web-shaped sound-damping or sound-proofing material, by heating the material while in contact with the substrate. To prevent stacked sections of the sound-damping or sound-proofing material from sticking together during storage, a thin non-stick layer usually is applied to that surface of the material which during use is facing the substrate.

Recently, increasingly greater demands are made on the anchoring of the layers of the sound-damping and sound-proofing material against the substrate. The motor industry has developed testing methods to test the adhesion of the heat-anchored material also at low temperatures. In one such test, the material is heat-anchored to a prime-painted metal sheet which then, with the material adhering thereto, is mounted on a pendulum and cooled to the test temperature and maintained at this temperature for a specified minimum time, frequently more than 4 hours. Directly after removal from the freezer or refrigerator, a pendulum is mounted in such a manner that the metal sheet has its sound-damping or sound-proofing material facing forwardly in the direction of the drop when the pendulum during the test is allowed to swing down against a fixed abutment which stops the pendulum motion vertically beneath the axis of suspension of the pendulum. In this test, the heat-anchored material is subjected to forces of inertia at right angles outwardly from the substrate. After the pendulum and the metal sheet attached thereto have dropped onto the abutment a specified number of times, for instance 6 times, it is determined, on a percentage basis, how much of the layer of material has come loose from the primed sheet metal surface. This test is called the cold-resistance impact test, and some car manufacturers have so far required a cold-resistance of better than +5°C. Cold-resistance requirements have now been increased to at least −15°C. Unfortunately, it has been found that the adhesive strength of present-day sound-damping and sound-proofing materials is insufficient at such low temperatures. In view hereof, it is an object of the present invention to improve the cold-resistance of heat-anchored bitumen-based sound-damping and sound-proofing materials. A further object is to improve the adhesion of these materials to the substrate by application of a special non-stick layer to that side of the material which during use is facing the substrate.

These and other objects of this invention can be achieved by applying between the substrate and the sound-damping or sound-proofing material a specially treated polyolefin film which preferably is affixed to the surface of this material. According to the invention, the polyolefin film should be a film which has been subjected, at least on its free side facing said substrate, to a corona treatment, i.e. a pretreatment by which the surface is subjected to radiation from a corona discharge. Thus, it has surprisingly been found that a polyolefin film subjected to such treatment is capable of increasing the cold-resistance in the above-mentioned test to far better than −15°C. The corona treatment may be carried out directly on the machine in which the sound-damping or sound-proofing material is produced, but may also have been carried out at an earlier stage so that, on the machine, the film merely is laminated to the web of material. The polyolefin presently preferred for the film is polyethylene, if thermoforming of the sound-damping or sound-proofing material is to take place at an object temperature of about 150°C. At other thermoforming temperatures, for instance 180°C, it may sometimes be better to use other polyolefins, such as polypropylene. The film thickness should be as small as possible, and a thickness range of 0.005—0.1 mm is entirely practicable. The preferred range is, however, 0.005—0.5 mm because thicker materials may tend to shrink when heated.

A panel- or web-shaped sound-damping or sound-proofing material according to the invention thus has a polyolefin film on its surface, and the material is adhered to a substrate by heating, while the polyolefin film is in contact therewith. According to the invention, the adhesion of the material to the substrate is improved in that at least the free surface, facing the substrate, of the polyolefin film is corona-treated before the material is anchored to the substrate. The characteristic features of the material and the method according to the invention will appear from the claims.

The invention will be illustrated below with reference to the some Examples.

### Example 1

A web of sound-damping material was manufactured from a mixture of asphalt and filler. The web had a thickness of 1.6 mm and a grammage of 2600 g/m². A number of samples of the material were heat-anchored to prime-painted metal sheets by placing the web loosely on a metal sheet. During heating, the metal sheets carrying the loose web were arranged horizontally, and heating was carried out in a hot air oven. When the oven had been heated to 180°C with hot air, the metal sheets were placed in the oven, and the air temperature was lowered to 145°C. The total time in the oven was 30 min, but after about 10 min the temperature of the material (measured with thermocouples in the material) had increased to about 150°C, a temperature that was maintained for the remaining period of about 20 min. The samples were then removed from the oven and allowed to cool to room temperature before they were cooled to different temperatures to +5°C, 0°C, −5°C, −15°C, −25°C and −40°C, and were maintained at this temperature for at least 4 hours. After removal from the freezer and refrigerator, respectively, the different samples were subjected to the cold-resistance test referred to above, and six heavy impacts or decelerations of the pendulum with the metal sheet attached thereto were made. The test series showed that 100% of the surface area of the layers had retained their adhesion at +5°C and 0°C; about 90% at −5°C; and 0% at −15°C, −25°C and −40°C.

### Example 2

Example 1 was repeated with the same mixture of asphalt and filler, but in this case one side of the web was laminated with a polyolefin film. The polyolefin film utilised in this case was an untreated polyethylene film having a thickness of 0.012 mm. In this Example, the web had a thickness of 1.7 mm and a grammage of 2700 g/m². The same cold-resistance test as in Example 1 showed that 100% of the surface area of the layers had retained their adhesion at +5°C and 0°C; about 90% at −5°C; and 0% at −15°C, −25°C and −40°C.

### Example 3

Example 2 was repeated, but in this case the polyolefin film was subjected to a corona discharge treatment prior to its lamination with the web. The polyolefin film employed was a polyethylene film having a thickness of 0.012 mm, and only that side of the film which during lamination was facing away from the web, was subjected to the corona treatment. After heat-anchoring of the web to prime-painted metal sheets, it was found that 100% of the surface area of the layers had retained their adhesion to the backing sheet at cold-resistance tests made at all of the test temperatures down to −40°C. The best cold-resistance of this material could not be determined because the freezer equipment available could not produce temperatures below −40°C.

It appears from the Examples that the corona treatment of the free surface of the polyolefin film results in an unexpected improvement of the cold-resistance. This improved adhesion must be regarded as surprising, and the polyolefin film may thus be used for two purposes, on the one hand as a non-stick layer during storage and handling and, on the other hand, as an adhesion-increasing layer. Further tests revealed that the same effect is obtained also for other grammages of the web of sound-damping material. Thus, considerable improvements of the adhesion have been established also by vibration noise and air noise damping webs having a grammage of 7.5 kg/m².

### Claims

1. A method of adhering to a substrate a bitumen-based, panel- or web-shaped sound-damping or sound-proofing material, in which method the adhesion of the material is achieved by heating to above the melting point of the bitumen, characterised in that the adhesion is increased by applying between the bitumen and the substrate a polyolefin film of which at least the surface facing the said substrate has been corona-treated prior to anchoring of the sound-damping or sound-proofing material to the substrate.

2. A method as claimed in claim 1, characterised in that the polyolefin film is adhered to the sound-damping or sound-proofing layer prior to the heat-anchoring thereof to the substrate.

3. A method as claimed in claim 1 or 2, characterised in that the polyolefin film is a polyethylene film.

4. A panel- or web-shaped, bitumen-based sound-damping or sound-proofing material, characterised in that it carries on its side intended to face a substrate a superficially adhering polyolefin film that has been corona-treated at least on its free outwardly facing side.

5. A material as claimed in claim 4, characterised in that the polyolefin film is a polyethylene film.

### Patentansprüche

1. Verfahren zum Verkleben eines auf Bitumen basierten, scheiben- oder bahnförmigen, schalldämpfenden oder schalldämmenden Materials mit einem Substrat, bei welchem Verfahren die Anhaftung des Materials durch Erhitzen auf über den Schmelzpunkt des Bitumens zustandegebracht wird, dadurch gekennzeichnet, dass die Anhaftung dadurch verstärkt wird, dass zwischen dem Bitumen und dem Substrat eine Polyolefinfolie angebracht wird, von der zumindest die dem Substrat zugewandte Fläche vor der Verankerung des schalldämpfenden oder schalldämmenden Materials einer Koronabehandlung unterzogen worden ist.

2. Verfahren nach Anspruch 1, dadurch gekennzeichnet, dass die Polyolefinfolie mit der schalldämpfenden oder schalldämmenden Schicht vor deren Hitzeverankerung am Substrat verklebt wird.

3. Verfahren nach Anspruch 1 oder 2, dadurch gekennzeichnet, dass die Polyolefinfolie eine Polyäthylenfolie ist.

4. Scheiben- oder bahnförmiges, auf Bitumen basiertes, schalldämpfendes oder schalldämmendes Material, dadurch gekennzeichnet, dass es auf seiner dem Substrat zuzukehrenden Seite eine oberflächlich anhaftende Polyolefinfolie trägt, die zumindest auf ihrer freien, nach aussen gekehrten Seite einer Koronabehandlung unterzogen worden ist.

5. Material nach Anspruch 4, dadurch gekennzeichnet, dass die Polyolefinfolie eine Polyäthylenfolie ist.

### Revendications

1. Une méthode permettant de faire adhérer à un substrat un matériau insonorisant ou antisonique à base de bitume, en forme de panneaux ou de voile, méthode dans laquelle l'adhésion du matériau est obtenue par chauffage au-delà du point de fusion du bitume, caractérisée par le fait que l'adhésion est améliorée par l'application entre le bitume et le substrat d'un film de polyoléfine dont moins la surface faisant face audit substrat a subi un traitement corona préalablement à la fixation du matériau insonorisant ou antisonique au substrat.

2. Une méthode conforme à la revendication 1, caractérisée par le fait que le film de polyoléfine est fixé à la couche de matériau insonorisant ou antisonique préalablement à la fixation à chaud de cette dernière sur le substrat.

3. Une méthode conforme aux revendications 1 ou 2, caractérisée par le fait que le film de polyoléfine est un film de polyéthylène.

4. Un matériau insonorisant ou antisonique à base de bitume, en forme de panneaux ou de voile, caractérisé par le fait qu'il est recouvert, sur sa face destinée à être appliquée sur un substrat, d'un film de polyoléfine ayant subi un traitement corona au minimum sur sa surface libre extérieure.

5. Un matériau conforme à la revendication 4, caractérisé par le fait que le film de polyoléfine est un film de polyéthylène.